## Europäisches Patentamt

## European Patent Office

## Office européen des brevets

(11) Numéro de publication : **0 314 770 B1**

(12)                          **FASCICULE DE BREVET EUROPEEN**

(45) Date de publication du fascicule du brevet :
**15.04.92 Bulletin 92/16**

(51) Int. Cl.⁵ : **A01G 31/02**

(21) Numéro de dépôt : **88905168.6**

(22) Date de dépôt : **18.05.88**

(86) Numéro de dépôt international :
**PCT/BE88/00017**

(87) Numéro de publication internationale :
**WO 88/09116 01.12.88 Gazette 88/26**

(54) **PERFECTIONNEMENT DES INSTALLATIONS ET PROCEDES D'INJECTIONS DE SOLUTION NUTRITIVE AQUEUSE DANS LES CULTURES HYDROPONIQUES.**

(30) Priorité : **18.05.87 BE 8700550**

(43) Date de publication de la demande :
**10.05.89 Bulletin 89/19**

(45) Mention de la délivrance du brevet :
**15.04.92 Bulletin 92/16**

(84) Etats contractants désignés :
**IT NL**

(56) Documents cités :
**EP-A- 0 169 687**
**US-A- 2 810 988**
**US-A- 3 757 470**
**US-A- 3 868 787**

(73) Titulaire : **JULIEN, Philippe**
**323, Avenue Molière**
**B-1060 Bruxelles (BE)**

(72) Inventeur : **JULIEN, Philippe**
**323, Avenue Molière**
**B-1060 Bruxelles (BE)**

(74) Mandataire : **Overath, Philippe**
**Cabinet Bede 13, Avenue Antoine Depage**
**B-1050 Bruxelles (BE)**

## Description

La présente invention concerne une installation hydroponique pour la culture de plantes dans laquelle les racines sont constamment immergées dans une solution nutritive aqueuse.

On sait actuellement que la capacité d'une plante d'absorber de l'eau dépend du degré de saturation de celle-ci en oxygène dissout et pas uniquement en air dissout, aux alentours de ses racines.

Il va de soi que sans absorption d'eau la plante n'absorbe aucune substance nutritive.

Il y a en outre des périodes où les racines ont besoin de dégager du gaz tel que le dioxyde de carbone ($CO_2$) et l'éthylène.

Le but étant de dissoudre un gaz dans l'eau, de l'oxygène en l'occurrence, la méthode la plus couramment utilisée dans les aquariums par exemple, consiste à souffler de l'air dans l'eau, ce qui est une mauvaise méthode. En effet, chaque bulle d'air qui contient 21% d'oxygène, comme dans l'atmosphère, ne possède qu'une faible surface au travers de laquelle son oxygène doit pouvoir diffuser dans le volume d'eau, l'eau entourant la bulle qui est énorme par rapport au volume de de celle-ci.

Par contre dans le procédé HCI objet de l'invention, cet énorme volume d'eau est fractionné en petites gouttelettes, chacune étant entourée d'un volume d'air énorme par rapport à celui de la gouttelette. En d'autres termes, les conditions physiques dans ce procédé sont totalement inversées.

Dès lors, les gaz cherchant un état d'équilibre (loi fondamentale de la physique), l'oxygène, abondant dans l'air, diffusera aisément au travers de la surface des gouttelettes d'eau qui renferment peu ou pas d'oxygène.

Pendant la croissance de la plante, ses racines dégagent dans l'eau du dioxyde de carbone ($CO_2$) ou de l'éthylène ce qui amène la concentration de ces gaz dans les gouttelettes à dépasser celle de l'air environnant. De ce fait, ces gaz pourront facilement quitter les gouttelettes d'eau pour diffuser dans cet air environnant. C'est en cela que consiste le procédé HCI d'échange gazeux. Des deux saturations celle en oxygène est de loin la plus importante car elle est la plus difficile à réaliser économiquement. Cette difficulté est encore plus grande lorsque la température de l'air et de l'eau est plus élevée, c'est-à-dire en été, qui est précisément la saison où la demande en oxygène des plantes est la plus grande, car celles-ci sont en pleine activité de croissance et sont chargées de fruits.

C'est dans de telles conditions que les autres systèmes s'avèrent être insuffisants ce qui se traduit par la mort d'un grand nombre de racines entraînant la détérioration de la plante elle-même avec la possibilité de voir cette maladie dévastatrice s'étendre à toutes les autres racines.

On sait également que les racines serrées dans un support solide peuvent être endommagées mécaniquement par celui-ci, le tissu de la plante abîmé par ce support ou autrement, étant maintenu en place peut, en se décomposant, engendrer une maladie qui va détruire l'ensemble des racines dans les systèmes hydroponiques existants, tant statiques qu'à recirculation.

Deux méthodes d'injection de substances nutritives seront décrites, l'une utilisant des trous forés au laser, l'autre des ajutages individuels, les deux permettant la fourniture de la solution nutritive nécessaire sous forme de brouillard. La méthode laser exige une pression de distribution et une pompe de taille plus élevée, pour les très grandes installations permettant le développement de racines à partir de boutures de plantes, mais peut aussi être d'une valeur inestimable pour la croissance pour racines de variétés de plantes difficiles. La méthode par adjutage requiert moins de pression mais fonctionne avec un débit plus grand ce qui la rend tout indiquée pour des plantes telles que les tomates qui ont besoin d'une longue période de culture (jusqu'à un an) ce qui se traduit par une augmentation sensible, tant de la croissance que de la destruction de la masse des racines. Le débit supérieur du sytème par injecteurs entraîne l'enlèvement accéléré des tissus détruits des racines ce qui assure un environnement exempt de racines malades.

Différents brevets ont déjà été déposés dans ce domaine dont les brevets européens :

– 0 010 737 du 01.12.1982
– 0 052 264 du 02.01.1986

qui concernent tous deux une installation hydroponique comportant une cuve avec couvercle amovible contenant une solution nutritive aqueuse et un volume d'air entre la surface de celle-ci et le couvercle dans lequel sont aménagées des couvertures pouvant recevoir chacune différents dispositifs pour maintenir fermement ces plantes en position verticale.

Dans le document EP 0052264, l'aération de la solution est réalisée par un dispositif central entraîné, soit en permanence, soit par intermittence, par un moteur électrique. Ce dispositif à axe vertical, comporte d'une part un disque horizontal tournant dans le volume d'air et d'autre part un tube d'aspiration de la solution nutritive injectant celle-ci directement sur le disque dont la forme du bord combinée à sa rotation provoque le débit de la solution nutritive dans le volume d'air sous forme de très petites gouttelettes formant un brouillard.

Dans le document EP 0010737 un trop-plein tubulaire permettant de régler le niveau de la solution nutritive est relié à un système bien connu, extérieur a la cuve, comportant entre autres, une pompe de circulation, une alimentation en eau, un système de régénération de la solution en sels minéraux, des filtres et un by-pass, la solution nutritive étant injectée sous pression dans la cuve par une ou plusieurs rampes tubulaires, sensiblement horizontales, a moitié immergées dans la solution, au travers d'une série de trous dirigeant celle-ci vers le haut, en direction du couvercle, de telle sorte que le volume d'air soit rempli d'un brouillard de solution nutritive descendant continuellement dans la solution et remplacé en permanence par d'autres quantités de solution injectée.

L'expérience a montré que ces deux brevets ne donnaient pas les résultats escomptés.

On connaît également le document EP 0 169 687 qui divulgue un lit de culture composé de blocs de laine de roche à l'intérieur desquels les racines des plantes se développent en se nourissant de substances nutritives amenées par des tuyaux projetant la substance sur les blocs de laine de roche.

Le document US 2.810.988 décrit une méthode de germination de fèves disposées en couches superposées entre des plaques perforées et arrosées d'eau provenant de tuyaux disposés au-dessus des couches de fèves.

Aucun de ces documents vise à obtenir un meilleur échange gazeux de la solution nutritive en provoquant la collision entre les gouttelettes projetées par les tuyaux.

L'objectif de la présente invention est d'améliorer le rendement de telles cultures hydroponiques en supprimant tout déchet de plante morte, grâce à l'élimination rapide des parties de racines endommagées ou déformées qui constituent des environnements idéaux pour le développement de pathogènes.

Dans ce but un nouveau dispositif d'injection de la solution nutritive, objet de l'invention, a été mis au point. Il permet d'obtenir des gouttelettes aussi petites que possible ayant un rapport surface/volume aussi grand que possible ce qui leur donne un pouvoir d'échange gazeux optimum et une plus grande capacité de pénétration au sein de la solution.

A cet effet, l'installation et le procédé de culture hydroponique selon l'invention sont réalisés respectivement selon les revendications 1 et 5 ci-après.

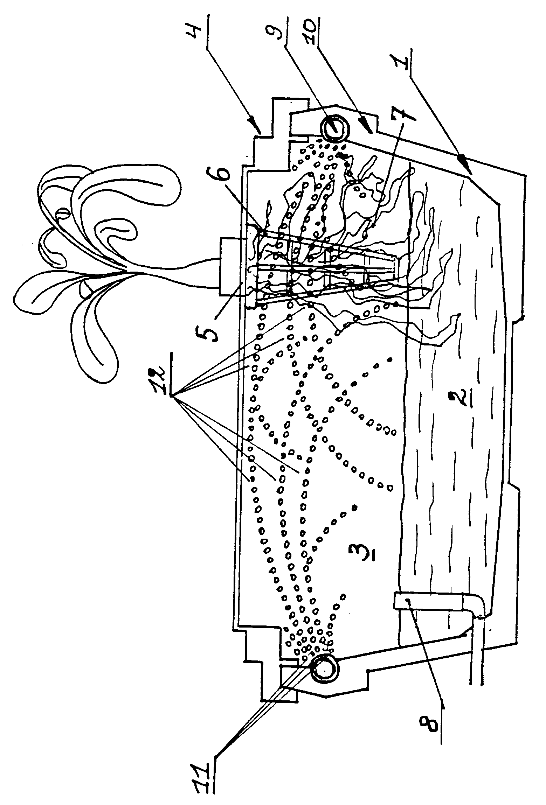

Le dessin annexé illustre l'invention, à titre exemplatif uniquement, par une section perpendiculaire à l'axe longitudinal de l'installation.

L'ensemble de l'installation représentée comporte une cuve 1 contenant la solution nutritive 2 et un volume d'air 3 entre la surface de celle-ci et le couvercle amovible 4 qui est pourvu d'ouvertures 5 contenant chacune un porte-plante 6 qui maintient en place la plante dont les racines 7 sont immergées dans la solution nutritive 2. Un trop-plein réglable 8 permet d'ajuster le niveau de la solution 2 dans la cuve 1.

Conformément à l'invention les rampes tubulaires d'alimentation 9 en solution nutritive 2, sensiblement horizontales, entièrement localisées dans le volume d'air 3 compris entre la surface de la solution 2 et le couvercle 4 de la cuve 1, sont logées dans les parois latérales 10 de celle-ci où elles sont maintenues par des moyens élastiques de fixation (non représentés) et pourvues d'orifices d'injection 11, régulièrement espacés les uns des autres (de 25 à 50 cm), disposés de telle sorte qu'ils injectent sous pression (de 2 à 4 bars), par l'intermédiaire d'un système extérieur bien connu, auquel les rampes tubulaires sont raccordées, système extérieur comportant entre autres une pompe de circulation, la solution nutritive 2 de préférence sous forme de gouttelettes suivant des trajectoires opposées 12 sensiblement horizontales.

Ce nouveau système d'injection fait que les gouttelettes s'entrechoquent avec force de telle sorte qu'elles se divisent ce qui augmente leur rapport surface/volume et leur capacité d'échange gazeux ainsi que leur aptitude à pénétrer en profondeur dans la solution améliorant ainsi nettement leur absorption par toutes les racines ce qui se traduit à l'expérience par une augmentation du rendement des cultures hydroponiques accompagné par une réduction de la détérioration des racines des plantes et par une évacuation plus rapide des tissus morts ou déformés dans le cas d'une installation à grand débit (avec ajutages).

Dans une première réalisation de l'invention les orifices d'injection 11 sont réalisés par percement au laser de manière à obtenir un diamètre aussi petit que possible. La pression de distribution de la solution nutritive doit être dans ce cas assez élevée pour obtenir un résultat favorable.

Dans une deuxième réalisation de l'invention les orifices d'injection 11 sont munis d'ajutages individuels ce qui nécessite moins de pression mais un débit plus grand et rend l'installation particulièrement intéressante pour certains types de plantes qui ont besoin d'une longue période de culture.

Bien entendu diverses modifications peuvent être apportées par l'homme de l'art au dispositif qui vient d'être décrit uniquement à titre d'exemple non limitatif sans sortir du cadre de l'invention.

## Revendications

1. Installation de culture hydroponique comportant une cuve (1) munie d'un couvercle amovible (4) et pouvant contenir une solution nutritive aqueuse (2), un volume d'air (3) entre la solution (2) et le couvercle (4), un trop-plein (8) permettant le réglage du niveau de la solution (2) à l'intérieur de la cuve (1) et son évacuation continue vers un système extérieur comportant entre autres une pompe de circulation, un dispositif d'injection de la solution nutritive (2) consistant en des rampes tubulaires (9) et, des porte-plantes (6) localisés dans des ouvertures (5) pratiquées dans le couvercle (4) caractérisée en ce que les rampes tubulaires (9) entièrement localisées dans le volume d'air (3) entre la solution (2) et le couvercle (4) de la cuve (1) comportent des orifices d'injection (11), régulièrement espacés, qui injectent la solution (2) sous pression suivant les trajectoires opposées (12) sensiblement horizontales au-dessus de la surface de la solution (2) de manière à obtenir une collision entre les gouttelettes.

2. Installation de culture hydroponique selon la revendication 1, caractérisée en ce que les rampes tubulaires d'injection (9) sont logées dans les parois latérales (10) de la cuve (1) sous le couvercle (4) et maintenues par des moyens élastiques de fixation.

3. Installation de culture hydroponique selon la revendication 1, caractérisée en ce que les orifices d'injection (11) ont été obtenus par percement au laser afin que leur diamètre soit aussi petit que possible.

4. Installation de culture hydroponique selon la revendication 1, caractérisée en ce que les orifices d'injection (11) sont munis de pièces d'ajutage.

5. Procédé d'injection de solution nutritive aqueuse dans les cultures hydroponiques à l'aide d'une installation comprenant une cuve (1) munie d'un couvercle amovible (4) et pouvant contenir une solution nutritive aqueuse (2), un volume d'air (3) entre la solution (2) et le couvercle (4), un trop-plein (8) permettant le réglage du niveau de la solution (2) à l'intérieur de la cuve (1) et son évacuation continue vers un système extérieur comportant entre autres une pompe de circulation, un dispositif d'injection de la solution nutritive (2) consistant en des rampes tubulaires (9) et des porte-plantes (6) localisés dans des ouvertures (5) pratiquées dans le couvercle (4), caractérisé en ce que le dispositif d'injection en injectant les gouttelettes sur des trajectoires opposées (12), sensiblement horizontales, favorise leur éclatement suite à la collision entre les gouttelettes, ce qui augmente leur rapport surface/volume et améliore sensiblement leur capacité de transfert gazeux et leur pénétration au sein de la solution nutritive afin d'accomplir la saturation permanente en oxygène de cette solution.

## Claims

1. Hydroponic culture installation, consisting of a vessel (1) fitted with a removable cover (4) able to contain a nutrient aqueous solution (2), a volume of air (3) between said solution (2) and said cover (4), an overflow (8) which makes it possible to regulate the level of the solution (2) inside the vessel (1) and to evacuate it continuously towards an external system consisting of among other things a circulating pump, a device for injecting the nutrient solution (2) consisting of tubular ramps (9), and plant holders (6) located in openings (5) in the cover (4), characterized in that the tubular ramps (9) entirely located in the volume of air (3) between the solution (2) and the cover (4) of the vessel (1) have injection orifices (11), regularly spaced, which inject the solution (2) under pressure following opposite trajectories (12) more or less horizontally above the surface of the solution (2) in such a way as to obtain collision between the drops.

2. Hydroponic culture installation according to claim 1, characterized in that the tubular injection ramps (9) are mounted in the side walls (10) of the vessel (1) under the cover (4) and are kept by elastic means of attachment.

3. Hydroponic culture installation according to claim 1, characterized in that the injection orifices (11) are obtained by laser piercing so that their diameter is as small as possible.

4. Hydroponic culture installation according to claim 1, characterized in that the injection orifices (11) are fitted with nozzle parts.

5. Process for injecting nutrient aqueous solution in hydroponic cultures with the aid of an installation consisting of a vessel (1) fitted with a removable cover (4) able to obtain a nutrient aqueous solution (2), a volume of air (3) between said solution (2) and said cover (4), an overflow (8) which makes it possible to regulate the level of the solution (2) inside the vessel (1) and to evacuate it continuously towards an external system consisting of among other things a circulating pump, a device for injecting the nutrient solution (2) consisting of tubular ramps (9), and plant holders (6) located in openings (5) in the cover (4), characterized in that the injection device, by injecting drops in opposite trajectories (12), more or less horizontally, favours shattering of the drops as a result of collisions between them, thus increasing their surface/volume ratio and significantly increasing their gas transfer capacity and their penetration within the nutrient solution in order to obtain permanent oxygen saturation of said solution.

## Patentansprüche

1. Hydrokultureinrichtung, umfassend ein Gefäß (1), das mit einer abnehmbaren Abdeckung (4) versehen ist und eine wässerige Nährlösung (2) enthalten kann, ein Luftvolumen (3) zwischen der Lösung (2) und der Abdeckung (4), einen Überlauf (8) zur Regelung des Füllstands der Lösung (2) im Innern des Gefäßes (1) und ihre ständige Ableitung in ein äußeres System, das u.a. eine Umwälzpumpe umfaßt, eine aus röhrenförmigen Rampen (9) bestehende Vorrichtung zum Einspritzen der Nährlösung (2) und Pflanzenträger (6), die in Öffnungen (5) angeordnet sind, welche in der Abdeckung (4) angebracht sind, dadurch gekennzeichnet, daß die röhrenförmigen Rampen (9), die sich vollständig im Luftvolumen (3) zwischen der Lösung (2) und der Abdeckung (4) des Gefäßes (1) befinden, Einspritzöffnungen (11) in gleichmäßigen Abständen aufweisen, die die Lösung (2) unter Druck. entlang der sich gegenüberliegenden, im wesentlichen horizontal über der Oberfläche der Lösung (2) verlaufenden Bahnen (12) einspritzen, um eine Kollision zwischen den Tröpfchen zu erreichen.

2. Hydrokultureinrichtung nach Anspruch 1, dadurch gekennzeichnet, daß die röhrenförmigen Einspritzrampen (9) in den Seitenwänden (10) des Gefäßes (1) unter der Abdeckung (4) angeordnet sind und durch elastische Befestigungsmittel gehalten werden.

3. Hydrokultureinrichtung nach Anspruch 1, dadurch gekennzeichnet, daß die Einspritzöffnungen (11) durch Laserbohrung geschaffen worden sind, damit ihr Durchmesser so klein wie möglich ist.

4. Hydrokultureinrichtung nach Anspruch 1, dadurch gekennzeichnet, daß die Einspritzöffnungen (11) mit Düse versehen sind.

5. Verfahren zum Einspritzen einer wässerigen Nährlösung in Hydrokulturen mit Hilfe einer Einrichtung, umfassend ein Gefäß (1), das mit einer abnehmbaren Abdeckung (4) versehen ist und eine wässerige Nährlösung (2) enthalten kann, ein Luftvolumen (3) zwischen der Lösung (2) und der Abdeckung (4), einen Überlauf (8) zur Regelung des Füllstands der Lösung (2) im Innern des Gefäßes (1) und ihre ständige Ableitung in ein äußeres System, das u.a. eine Umwälzpumpe umfaßt, eine aus röhrenförmigen Rampen (9) bestehende Vorrichtung zum Einspritzen der Nährlösung (2) und Pflanzenträger (6), die in Öffnungen (5) angeordnet sind, welche in der Abdeckung (4) angebracht sind, dadurch gekennzeichnet, daß die Einspritzvorrichtung beim Einspritzen der Tröpfchen auf die sich gegenüberliegenden, im wesentlichen horizontalen Bahnen (12) ihr Zerplatzen nach der Kollision zwischen den Tröpfchen begünstigt, was ihr Oberflächen/Volumen-Verhältnis vergrößert und deutlich ihr Gasaustauschvermögen und ihr Eindringen in die Nährlösung verbessert, um die permanente Sättigung dieser Lösung mit Sauerstoff zu erreichen.